(19) Europäisches Patentamt
European Patent Office
Office européen des brevets

(11) **EP 4 261 773 A1**

(12) **EUROPEAN PATENT APPLICATION**
published in accordance with Art. 153(4) EPC

(43) Date of publication:
**18.10.2023 Bulletin 2023/42**

(21) Application number: **20965133.0**

(22) Date of filing: **10.12.2020**

(51) International Patent Classification (IPC):
***G06T 7/00*** *(2017.01)*   ***G06T 7/90*** *(2017.01)*

(52) Cooperative Patent Classification (CPC):
**G06F 18/00; G06T 7/00; G06T 7/90**

(86) International application number:
**PCT/JP2020/046151**

(87) International publication number:
**WO 2022/123751 (16.06.2022 Gazette 2022/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **MATSUNAMI, Tomoaki**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **DETERMINATION METHOD, DETERMINATION PROGRAM, AND INFORMATION PROCESSING DEVICE**

(57)    A computer obtains a facial image captured by a camera. The computer obtains, for each color component included in the facial image, an index representing a degree of possibility that a wearing object partially shielding the face is present in the facial image based on distribution of brightness of each color component in the facial image. The computer determines any of the color components included in the facial image based on color information of the facial image. The computer determines whether or not a wearing object is present in the facial image based on the determined color component and the index for each color component.

FIG. 7

**Description**

FIELD

The present invention relates to an image determination technique.

BACKGROUND

There has been known a technique of determining presence or absence of a concealment object in an input target image based on a similarity level of features at individual corresponding sample points between a reference target image related to a target and the input target image obtained by imaging the target.

Furthermore, there has been known a technique of determining whether or not a wearing object is worn on a face in a facial image based on reliability of feature points extracted from the facial image as features of constituent parts of the face, such as eyes, a mouth, and the like.

Furthermore, there has been known a technique of determining whether the face of a specific person is impersonation using a disguising mask or the like based on a temporal change in color of the face of the person extracted from multiple images including the face of the person.

Furthermore, there has been known a technique of determining whether a mask is worn from a luminance value of a captured facial image.

Furthermore, there has been known a technique of determining whether or not a subject wears a mask by comparing image information in a predetermined upper region and a predetermined lower region with a center line between an uppermost portion (head top portion) and a lowermost portion (jaw portion) of a human face as a vertical center to be sandwiched therebetween.

As described above, some techniques of determining, from a facial image of a person, presence or absence of a wearing object that partially shields the face of the person, such as a mask or sunglasses, have been known (e.g., see Patent Documents 1 to 5).

CITATION LIST

PATENT DOCUMENT

Patent Document 1: International Publication Pamphlet No. WO 2010/126120
Patent Document 2: International Publication Pamphlet No. WO 2019/102619
Patent Document 3: Japanese Laid-open Patent Publication No. 2019-194888
Patent Document 4: Japanese Laid-open Patent Publication No. 2010-157073

Patent Document 5: Japanese Laid-open Patent Publication No. 2004-310397

SUMMARY

[TECHNICAL PROBLEM]

There has been known a technique of facial authentication using a biometric feature of a human face as one of biometric authentication techniques. The facial authentication is for identity verification of a person to be authenticated by checking a captured facial image obtained by imaging the person to be authenticated against a registered facial image of the person to be authenticated registered in advance.

A person to be authenticated may wear a wearing object that partially shields a face, such as a mask, sunglasses, or the like. When the facial authentication is carried out using a captured facial image obtained by imaging such a person to be authenticated, for example, it may cause false rejection due to a decrease in similarity between the captured facial image and the registered facial image, and the accuracy in detecting the orientation and posture of the face may decrease. As described above, a wearing object that covers a part of the face of the person to be authenticated may affect the facial authentication. In view of the above, it is desired to accurately determine whether or not such a wearing object is present on a face of a subject in a facial image of the subject.

In one aspect, an object of the present invention is to accurately determine presence or absence of a wearing object in a facial image.

[SOLUTION TO PROBLEM]

In one idea, a computer obtains a facial image captured by a camera. The computer obtains, for each color component included in the facial image, an index representing a degree of possibility that a wearing object partially shielding the face is present in the facial image based on distribution of brightness of each color component in the facial image. The computer determines any of the color components included in the facial image based on color information of the facial image. The computer determines whether or not a wearing object is present in the facial image based on the determined color component and the index for each color component.

According to an aspect of the embodiments, a determination method causing a computer to perform a process includes obtaining a facial image captured by a camera; obtaining, for individual color components included in the facial image, an index that indicates a degree of possibility that a wearing object that partially shields a face is present in the facial image based on distribution of brightness of each of the color components in the facial image; determining any of the color components included in the facial image based on color information of the facial image; and determining whether or not the wearing object is present in the facial image based on the determined color component and the index for the individual color components.

[ADVANTAGEOUS EFFECTS OF INVENTION]

In one aspect, it becomes possible to accurately determine presence or absence of a wearing object in a facial image.

BRIEF DESCRIPTION OF DRAWINGS

FIG. 1 is a diagram (part 1) for explaining a method of determining presence or absence of a wearing object based on distribution of brightness of color components in a facial image;
FIG. 2 is a diagram (part 2) for explaining the method of determining presence or absence of a wearing object based on distribution of brightness of color components in a facial image;
FIG. 3 is a diagram illustrating exemplary distribution of brightness of redness components in a facial image in which no mask is present;
FIG. 4 is a diagram illustrating exemplary distribution of brightness of blueness components in the facial image in which no mask is present;
FIG. 5 is a diagram illustrating exemplary distribution of brightness of redness components in a facial image in which a red mask is present;
FIG. 6 is a diagram illustrating exemplary distribution of brightness of blueness components in the facial image in which the red mask is present;
FIG. 7 is a diagram illustrating an exemplary configuration of an information processing device;
FIG. 8 is a diagram illustrating an exemplary hardware configuration of a computer;
FIG. 9 is a flowchart (part 1) illustrating processing contents of a process for determining presence or absence of a wearing object; and
FIG. 10 is a flowchart (part 2) illustrating processing contents of the process for determining presence or absence of a wearing object.

DESCRIPTION OF EMBODIMENTS

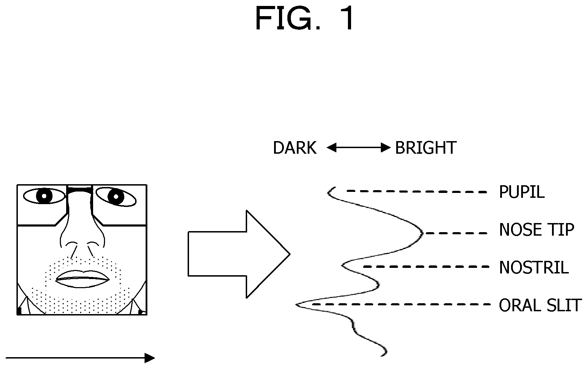

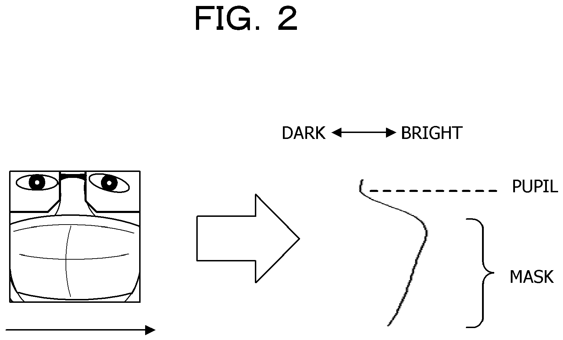

Hereinafter, an embodiment will be described in detail with reference to the drawings.
In the present embodiment, determination as to whether or not a wearing object is present on a face of a subject is made based on distribution of brightness of color components included in a facial image of the subject. First, this method will be described with reference to FIGs. 1 and 2.
An image on the left side of each of FIGs. 1 and 2 is an exemplary facial image, which is an image of the face of the same person. While a mask, which is an exemplary wearing object, is not present on the face seen in the facial image in FIG. 1, a white mask is worn on the face seen in the facial image in FIG. 2, and a part of the face including the nose and the mouth is shielded by the mask. Note that, although spectacles are worn on both faces seen in those facial images, the lenses of the spectacles have high transparency, and do not shield the eye portions of the faces.
A curve on the right side of each of FIGs. 1 and 2 indicates brightness distribution for one of individual color components included in the facial image on the left side of each of them. This distribution indicates distribution in which total values of individual pixel arrays or average values of the individual pixel arrays with respect to pixel values of each color component of individual pixels arranged in the individual pixel arrays of an image frame of the facial image in the horizontal direction are vertically arranged according to the arrangement order of the individual pixel arrays of the image frame in the vertical direction. Note that the lateral directions of those distributions in the drawings represent the magnitude of values for the individual pixel arrays, and the right directions in the drawings represent a direction with larger values, which is, a direction in which the brightness of the corresponding color component for the pixel array is higher. Those distributions are examples of the distribution of the brightness of the color components included in the facial image.
In the distribution illustrated on the right side of FIG. 1, features that the brightness takes a local minimum at each of positions corresponding to the pupil, the nostril, and the oral slit (between the upper lip and the lower lip) and takes a local maximum at a position corresponding to the nasal apex (nose tip) in the face seen in the facial image are clearly determined. On the other hand, in the distribution illustrated on the right side of FIG. 2, among the features described above, the features of the local maximum and the local minimum of the brightness at the respective positions corresponding to the nostril and the oral slit are unclear. This difference is due to the mask worn on the face seen in the facial image shielding the nose and the mouth.
In view of the above, in the present embodiment, an index indicating a degree of possibility that a wearing object that partially shields the face is present in the facial image is obtained based on the distribution of the brightness of each color component in the facial image as described above. Then, it is determined whether or not a wearing object is present in the facial image based on the index.
Here, focusing on the fact that there is a relationship as described above between the presence or absence of the wearing object and the features seen in the distribution described above, in the present embodiment, a model that outputs the index described above in response to an input of the distribution of the brightness described above is generated. This model is generated by machine learning using a known machine learning algorithm such as a neural network. In this machine learning, for each color component, a group of data each representing distribution of brightness in a facial image in which a wearing object is present and a group of data each representing distribution of brightness in a facial image in which no wearing object is present are used as training data. In the present embodiment, an index indicating a degree of possibility that a wearing object is present in a facial image is obtained using the model generated in this manner.

Meanwhile, there is a case where the distribution of the brightness in the facial image in which a mask is worn on the face so that the nose and the mouth are shielded exhibits the features of the local maximum and the local minimum similar to the distribution of the brightness in the facial image in which no mask is worn on the face. Next, a method for accurately determining the presence or absence of the wearing object even in such a case will be described.

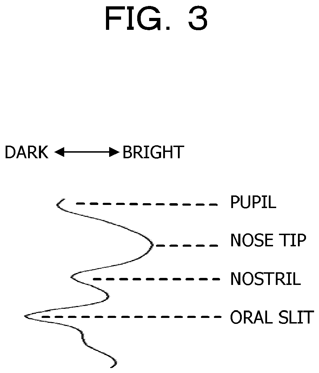

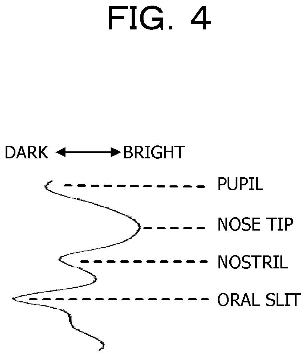

Each of FIGs. 3 and 4 illustrates exemplary distribution of brightness in a facial image in which not mask is present, and FIG. 3 is related to a redness component while FIG. 4 is related to a blueness component. As is clear from comparison between the distribution examples of FIGs. 3 and 4 and the distribution example of FIG. 1, the features of the local maximum and the local minimum of the brightness at the positions of respective parts of the face, which are clearly seen in the distribution example of FIG. 1, are clearly seen in both of the distribution examples of FIGs. 3 and 4.

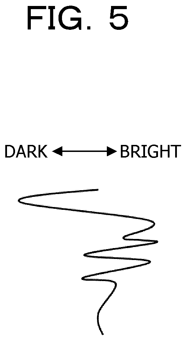

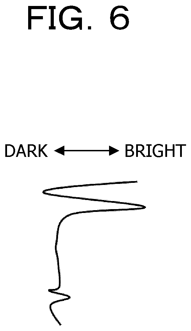

Next, distribution examples of FIGs. 5 and 6 will be focused. Both of those distribution examples illustrate distribution of brightness in a facial image when mask is worn on the face, and FIG. 5 is related to the redness component while FIG. 6 is related to the blueness component. However, the distribution examples of FIGs. 5 and 6 illustrate a case where the mask worn on the face is red.

In the distribution example of FIG. 5 illustrating the distribution example of the brightness of the redness component, portions indicating a local maximum and a local minimum of the brightness also appear at positions corresponding to the part on which the red mask is worn. Thus, in the distribution example of FIG. 5, it is difficult to determine whether or not the mask is present by comparison with the distribution example of FIG. 3 in which no mask is present. Such features of the local maximum and the local minimum appear in the distribution example of FIG. 5 because the worn mask is wrinkled and dark portions caused by the wrinkle in the mask part in the facial image appear as the local maximum and local minimum portions in the distribution of the brightness.

On the other hand, in the distribution example of FIG. 6 illustrating the distribution example of the brightness of the blueness component, the brightness of the part on which the red mask is worn is lower, and a local maximum and a local minimum are unclear. Thus, in the distribution example of FIG. 6, it is easy to determine whether or not the mask is present by comparison with the distribution example of FIG. 4 in which no mask is present. In the distribution example of FIG. 6 illustrating the distribution of the brightness of the blueness component, the brightness is lower in the entire region of the red mask part. Thus, even when a wrinkle of the mask causes a dark portion in the mask part of the facial image, the features of the local maximum and the local minimum at the positions corresponding the part on which the mask is worn as in the distribution example of FIG. 5 do not clearly appear.

From the above, it may be understood that better determination accuracy may be obtained by using the distribution of the brightness of the blueness component than the distribution of the brightness of the redness component in the determination as to whether or not a red mask is present in the facial image.

In view of the above, in the present embodiment, first, any of the color components included in the facial image is determined as a suitable color component to be used to determine whether or not a wearing object is present in the facial image. This determination is made based on color information of the facial image, and more specifically, it is preferably made based on whether the facial image contains a smaller amount of redness components or whether the image contains a smaller amount of blueness components, for example. This is because, in a case of a facial image in which a red wearing object is present, redness components of the facial image increase while blueness components of the facial image relatively decrease, and in a case of a facial image in which a blue wearing object is present, blueness components of the facial image increase while redness components of the facial image relatively decrease.

In the present embodiment, the determination as to whether or not a wearing object is present in the facial image is made based on the color component determined as described above and the index for each color component indicating the degree of possibility that the wearing object is present in the facial image. More specifically, this determination is made not using the indexes for individual color components equally but using the indexes set in such a manner that the weight for the determined color component is greater than the weights for the color components other than the determined color component. This makes it possible to accurately determine the presence or absence of the wearing object in the facial image.

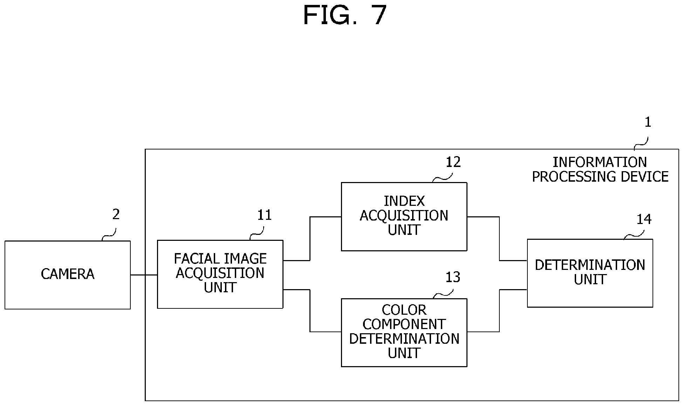

Next, a configuration of a device that determines whether or not a wearing object is present in a facial image will be described. FIG. 7 is a diagram illustrating an exemplary configuration of an information processing device 1.

A camera 2 is coupled to the information processing device 1. The camera 2 is used to image a person, and a captured image including an image of the face of the person obtained by the imaging is input to the information processing device 1.

The information processing device 1 includes a facial image acquisition unit 11, an index acquisition unit 12, a color component determination unit 13, and a determination unit 14.

The facial image acquisition unit 11 obtains an image of the face area (facial image) of the person from the captured image.

A large number of techniques have been known as techniques for obtaining a facial image from a captured image. The facial image acquisition unit 11 may adopt any of such known techniques to obtain a facial image from the captured image. In the present embodiment, the facial image acquisition unit 11 adopts, as a method for obtaining a facial image, the following method also described in Patent Document 4 mentioned above to obtain a facial image.

In this method, first, in a case where the total sum obtained by sequentially adding luminance values of individual pixels adjacently arranged in the vertical direction of the image frame of the captured image is larger than a preset threshold, it is determined that the pixels in the range in which the luminance values are sequentially added are included in the face area. This determination utilizes the fact that the face area tends to be captured relatively brightly compared to the hair area and the background area.

In this method, next, a change amount in the horizontal direction is calculated with respect to the sequentially added luminance values, and a position at which each calculated change amount largely changes over a threshold is specified as an outline portion of the face in the horizontal direction. This specification of the outline portion of the face utilizes the face that the change amount of the luminance value in the horizontal direction in the image frame tends to change relatively largely in the boundary region between the background area and the face area as compared to other portions.

According to this method, the range in the vertical direction and the horizontal direction in the captured image is specified in this manner, thereby specifying the face area.

The index acquisition unit 12 creates distribution of brightness of each color component included in the facial image obtained by the facial image acquisition unit 11, and obtains, for each color component, an index indicating a degree of possibility that a wearing object is present in the facial image based on the distribution of the brightness of each of the obtained color components.

The distribution of the brightness indicates distribution in which total values of individual pixel arrays or average values of the individual pixel arrays with respect to pixel values of each color component of individual pixels arranged in the individual pixel arrays of the image frame of the facial image in the horizontal direction are vertically arranged according to the arrangement order of the individual pixel arrays of the image frame in the vertical direction. In the present embodiment, the index acquisition unit 12 creates the distribution described above for each color component, and obtains the index described above using a model that outputs the index described for each color component in response to an input of the created distribution.

This model is, for example, a neural network. This model is generated by executing a known machine learning algorithm using a group of data prepared in advance as training data. In the present embodiment, as this group of data, a group of data each representing the distribution of the brightness of each color component in the facial image in which a wearing object is present and a group of data each representing the distribution of the brightness of each color component in the facial image in which no wearing object is present are used. For example, a value "1" indicating that a wearing object is present is, as an output, associated with the input of the distribution for the facial image in which the wearing object is present, and a value "0" indicating that no wearing object is present is, as an output, associated with the input of the distribution for the facial image in which no wearing object is present. Then, machine learning is carried out using those groups of data as training data. In this manner, a model that outputs the index described above having a value range that may take 0 or more and 1 or less is generated.

Note that the index acquisition unit 12 may obtain the index described above without using such a machine learning model. For example, reference distribution of the brightness of each color component included in a reference image of the face in which the wearing object is present may be prepared in advance, and a similarity level between the distribution of the brightness of each color component and the reference distribution of the brightness of each component may be calculated as the index described above.

The color component determination unit 13 determines any of the color components included in the facial image based on the color information of the facial image obtained by the facial image acquisition unit 11. In the present embodiment, this determination of the color component is made as follows.

In the present embodiment, it is assumed that the image data of the facial image is expressed in a YCbCr space. In the YCbCr space, a Cr component represents a redness component, and a Cb component represents a blueness component.

Note that, in a case where the image data is expressed in another color space, it is sufficient if the image data is converted into image data in the YCbCr space and then subject to each processing to be described below. Furthermore, in a case where the image data is expressed in an RGB color space, for example, each processing may be performed by replacing the Cr component and the Cb component in the following descriptions with an R component and a B component, respectively, assuming that the R component represents a redness component and the B component represents a blueness component.

First, each of a Cr component value and a Cb component value for each pixel included in the facial image is normalized so that a value range of component values becomes 0 or more and 1 or less. In the following descriptions, it is assumed that the Cr component value and the Cb component value are normalized.

Next, for each of the Cr component value and the Cb component value for each pixel included in the facial image, an average value in all pixels included in the facial image is calculated. The individual average values for the Cr component values and the Cb component values calculated at this time are referred to as $MI_{Cr}$ and $MI_{Cb}$, respectively. The $MI_{Cr}$ and $MI_{Cb}$ are information indicating a brightness level of each of the redness component and the blueness component included in the facial image, and are examples of the color information of the facial image.

The color component determination unit 13 may determine the color component by magnitude comparison between $MI_{Cr}$ and $MI_{Cb}$ calculated in this manner. That is, the Cb component may be a result of the color component determination when $MI_{Cb}$ is smaller than $MI_{Cr}$, and the Cr component may be a result of the color component determination when $MI_{Cr}$ is smaller than $MI_{Cb}$. However, since a color of human skin commonly tends to have many redness components, in the present embodiment, the color component determination is made after correcting the color components to be compared in consideration of this tendency to further improve the accuracy in determining the presence or absence of the wearing object in the facial image.

That is, the color component determination unit 13 first corrects the brightness of the redness components or the blueness components based on a relationship of the brightness level of each of the redness components and the blueness components included in the reference facial image in which no wearing object is present. The color component determination unit 13 makes the color component determination based on the brightness corrected in this manner.

More specifically, first, a facial image in which no wearing object is present is prepared as a reference facial image, and an average value of each of the normalized Cr component values and Cb component values is calculated in advance for each pixel included in the reference facial image. The average values of the individual Cr component values and Cb component values for the reference facial image calculated at this time are referred to as $MT_{Cr}$ and $MT_{Cb}$, respectively.

The color component determination unit 13 substitutes $MI_{Cb}$ out of $MI_{Cr}$ and $MI_{Cb}$ calculated as described above into the following [Equation 1] to calculate a corrected value $MI_{Cb}{}'$.

[Equation 1]

$$MI_{Cb}{}' = MI_{Cb}{}^{(MT_{Cb}/MT_{Cr})}$$

The color component determination unit 13 carries out magnitude comparison between the corrected value $MI_{Cb}{}'$ and $MI_{Cr}$, and sets the Cb component as a result of the color component determination when $MI_{Cb}{}'$ is smaller than $MI_{Cr}$, and sets the Cr component as a result of the color component determination when $MI_{Cr}$ is smaller than $MI_{Cb}{}'$. That is, the color component determination unit 13 determines the blueness component when the blueness component is lower than the redness component, and determines the redness component when the redness component is lower than the blueness component in the relationship of the brightness level of each of the blueness components and the redness components included in the facial image.

Note that, in the method described above, the color component determination unit 13 makes the color component determination based on the result of the magnitude comparison between the corrected value $MI_{Cb}{}'$ obtained by correcting the brightness level $MI_{Cb}$ of the blueness components included in the facial image and the brightness level $MI_{Cr}$ of the redness components included in the facial image. Alternatively, the color component determination unit 13 may make the color component determination based on a result of magnitude comparison between a corrected value obtained by correcting the brightness level $MI_{Cr}$ of the redness components and the brightness level $MI_{Cb}$ of the blueness components depending on the tendency for the color of the human skin described above.

The determination unit 14 determines whether or not a wearing object is present in the facial image based on the color component determined by the color component determination unit 13 and the index for each color component described above obtained by the index acquisition unit 12.

First, the determination unit 14 obtains a weight for each color component included in the facial image. This weight is set in such a manner that the weight for the color component determined by the color component determination unit 13 is greater than the weights for other color components. Next, the determination unit 14 gives the weights obtained for the individual color components to the indexes for the individual color components described above obtained by the index acquisition unit 12. The determination unit 14 determines whether or not a wearing object is present in the facial image based on the index for each color component to which the weight is given in this manner.

In the present embodiment, the determination unit 14 calculates each of a weight $W_{Cr}$ for the Cr component and a weight $W_{Cb}$ for the Cb component by performing the calculation of the following [Equation 2].

[Equation 2]

$$W_{Cr} = \frac{1}{1 + (MI_{Cr}/MI_{Cb}')}$$

$$W_{Cb} = \frac{MI_{Cr}/MI_{Cb}'}{1 + (MI_{Cr}/MI_{Cb}')}$$

Next, the determination unit 14 calculates a total index $P_t$, which is an index indicating a degree of possibility that a wearing object is present in the facial image, by calculating the following [Equation 3].

[Equation 3]

$$P_t = \frac{P_{Cr}W_{Cr} + P_{Cb}W_{Cb}}{2}$$

Note that, in [Equation 3], $P_{cr}$ and $P_{cb}$ are indexes indicating the degree of possibility that a wearing object is present in the facial image for the individual Cr component and Cb component obtained by the index acquisition unit 12, respectively. That is, [Equation 3] is an equation for calculating, as the total index $P_t$, an average value of the index for the Cr component to which the weight described above is given and the index for the Cb component to which the weight described above is given.

The determination unit 14 carries out magnitude comparison between the calculated total index $P_t$ and a predetermined threshold (e.g., 0.5). The determination unit 14 determines, based on the result of the magnitude comparison, that a wearing object is present in the facial image when the total index $P_t$ is equal to or larger than the threshold and that no wearing object is present in the facial image when the total index $P_t$ is smaller than the threshold, and outputs a determination result.

The output of the determination unit 14 is to be the output of the information processing device 1. This output is used in a facial authentication process to perform matching using separate registered facial images depending on the presence or absence of the wearing object in the facial image, for example.

The information processing device 1 in FIG. 7 includes the individual components described above. Note that the information processing device 1 may be configured by a combination of a computer and software.

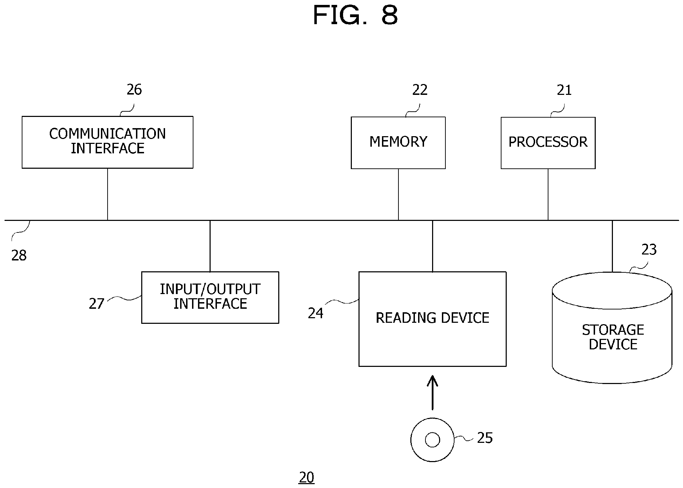

FIG. 8 illustrates exemplary hardware configuration of a computer 20.

The computer 20 includes, as components, a processor 21, a memory 22, a storage device 23, a reading device 24, a communication interface 26, and an input/output interface 27, for example. Those components are coupled via a bus 28, and data may be mutually exchanged between the components.

The processor 21 may be, for example, a single processor, a multiprocessor, or a multicore processor. The processor 21 executes, for example, a wearing object presence/absence determination processing program describing a procedure of a process for determining presence or absence of a wearing object to be described later using the memory 22.

The memory 22 is, for example, a semiconductor memory, and may include a RAM area and a ROM area. The storage device 23 is, for example, a semiconductor memory such as a hard disk or a flash memory, or an external storage device. Note that the RAM is an abbreviation for random access memory. Furthermore, the ROM is an abbreviation for read only memory.

The reading device 24 accesses a removable storage medium 25 in accordance with an instruction from the processor 21. The removable storage medium 25 is implemented by, for example, a semiconductor device (USB memory, etc.), a medium to which information is input and from which information is output by magnetic action (magnetic disk, etc.), a medium to which information is input and from which information is output by optical action (CD-ROM, DVD, etc.), or the like. Note that the USB is an abbreviation for universal serial bus. The CD is an abbreviation for compact disc. The DVD is an abbreviation for digital versatile disk.

The communication interface 26 transmits and receives data via a communication network (not illustrated) in accordance with an instruction from the processor 21, for example.

The input/output interface 27 obtains various types of data such as image data of captured images transmitted from the camera 2. Furthermore, the input/output interface 27 outputs a result of the process for determining presence or absence of a wearing object to be described later output from the processor 21.

This wearing object presence/absence determination program to be executed by the processor 21 of the computer 20 is provided in the following form, for example.

    (1) Installed on the storage device 23 in advance.
    (2) Provided by the removable storage medium 25.
    (3) Provided to the communication interface 26 from a server, such as a program server, via a communication network.

Note that the hardware configuration of the computer 20 is exemplary, and the embodiment is not limited to this. For example, a part or all of the functions of the functional units described above may be implemented as hardware including FPGA, SoC, and the like. Note that the FPGA is an abbreviation for field programmable gate array. The SoC is an abbreviation for system-on-a-chip.

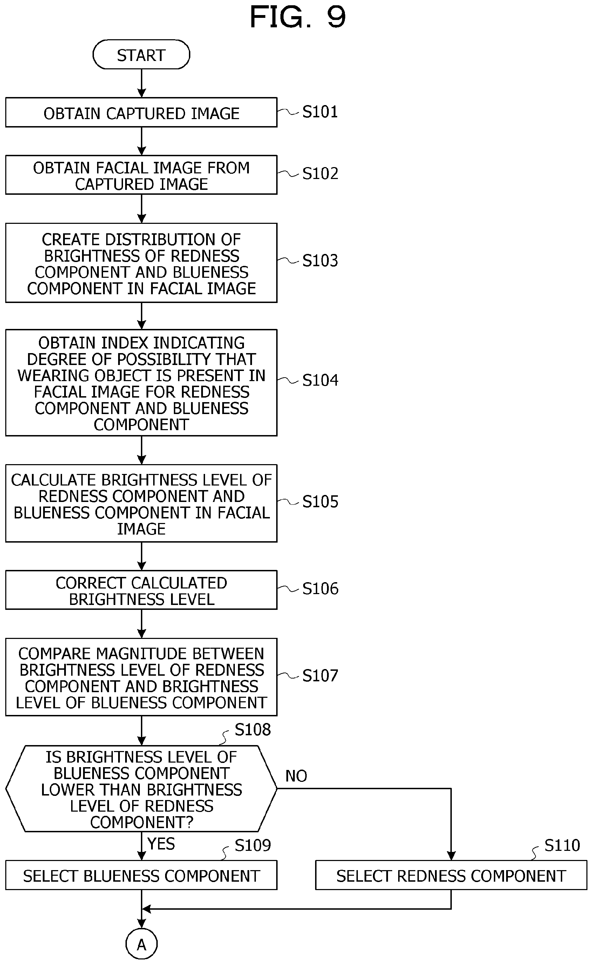

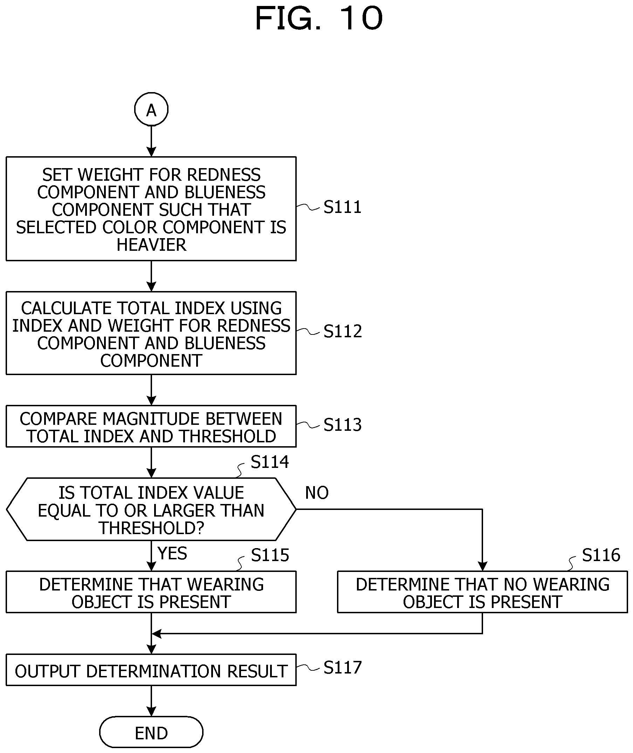

Hereinafter, the process for determining presence or absence of a wearing object described in the wearing object presence/absence determination program to be executed by the processor 21 will be described. FIGs. 9 and 10 are flowcharts illustrating processing contents of the process for determining presence or absence of a wearing object.

Note that it is assumed that the processor 21 is enabled to use a model (e.g., neural network) that outputs, in response to an input of the distribution of the brightness of each color component in the facial image, an index indicating a degree of possibility that a wearing object is present in the facial image for each color component. As described above, in the present embodiment, a known machine learning algorithm using a group of data prepared in advance as training data is executed, thereby generating the model described above in advance. As this group of data serving as the training data, a group of data each representing the distribution of the brightness of each color component in the facial image in which a wearing object is present and a group of data each representing the distribution of the brightness of each color component in the facial image in which no wearing object is present are used.

When the process for determining presence or absence of a wearing object starts, in FIG. 9, first, processing for obtaining a captured image including an image of a face of a person transmitted from the camera 2 is performed in S101.

Next, in S102, processing for obtaining a facial image from the obtained captured image is performed. In this processing, the facial image is obtained using a method similar to the method described above as a method adopted by the facial image acquisition unit 11 in the information processing device 1 in FIG. 7.

The processor 21 performs the processing of S101 and S102 described above, thereby providing the function of the facial image acquisition unit 11 described above.

Next, in S103, processing for creating distribution of brightness of redness components and blueness components in the facial image obtained through the processing of S102 is performed. The distribution created through this processing is the distribution described above as being created by the index acquisition unit 12 in the information processing device 1 in FIG. 7.

Next, in S104, processing for obtaining an index indicating a degree of possibility that a wearing object is present in the facial image obtained through the processing of S102 for the redness components and the blueness components is performed. In this processing, the distribution of the brightness of the redness components and the blueness components created through the processing of S103 is input to the model described above that outputs this index, thereby performing the processing for obtaining the index output from the model.

The processor 21 performs the processing of S103 and S104 described above, thereby providing the function of the index acquisition unit 12 described above.

Next, in S105, processing for calculating a brightness level of the redness components and the blueness components in the obtained facial image is performed. In this processing, the processing described above is performed as processing to be performed by the color component determination unit 13 in the information processing device 1 in FIG. 7. That is, in this processing, processing for calculating the average values $MI_{Cr}$ and $MI_{Cb}$ in all pixels included in the facial image is performed for the respective Cr component values and Cb component values from the Cr component values and the Cb component values of individual pixels included in the facial image.

Next, in S106, processing for correcting the brightness level calculated in the processing of S105 is performed. In this processing, processing of calculating the corrected value $MI_{Cb}{}'$ from $MI_{Cb}$ using [Equation 1], which is the processing described above as being performed by the color component determination unit 13, is performed.

Next, in S107, processing for carrying out magnitude comparison between the brightness level of the redness components and the brightness level of the blueness components is performed. In this processing, processing of carrying out the magnitude comparison between $MI_{Cb}{}'$ and $MI_{Cr}$, which is the processing described above as being performed by the color component determination unit 13, is performed.

Next, in S108, determination processing based on the magnitude comparison result in S107 is performed. That is, processing for determining whether or not the brightness level of the blueness components is lower than the brightness level of the redness components is performed.

If it is determined that the brightness level of the blueness components is lower than the brightness level of the redness components in the determination processing in S108 (if the determination result is YES), the process proceeds to S109. Then, in S109, processing of selecting the blueness component as a result of the color component determination is performed.

On the other hand, if it is determined that the brightness level of the redness components is lower than the brightness level of the blueness components or that both of them are equal to each other in the determination processing in S108 (if the determination result is NO), the process proceeds to S110. Then, in S110, processing of selecting the redness component as a result of the color component determination is performed.

After the processing of either S109 or S110 is complete, the process proceeds to S111 in FIG. 10.

Note that, in the determination processing in S108 described above, the redness component is selected as the result of the color component determination if it is determined that both of the brightness level of the redness components and the brightness level of the blueness components are equal to each other. Instead of that, if both of them are determined to be equal to each other, the blueness component may be selected as the result of the color component determination.

The processor 21 performs the process of S105 to S110 described above, thereby providing the function of the color component determination unit 13 described above.

Next, in FIG. 10, processing for obtaining weights for the redness component and the blueness component is performed in S111. In this processing, processing of calculating the weights $W_{Cr}$ and $W_{Cb}$ from $MI_{Cr}$ and $MI_{Cb}'$ using [Equation 2], which is described above as the processing performed by the determination unit 14 in the information processing device 1 in FIG. 7, is performed. As a result, the weight for the color component selected by executing the processing of S109 or S110 in FIG. 9 is set to be greater than the weight for the other color component.

Next, in S112, processing for calculating a total index indicating a degree of possibility that a wearing object is present in the facial image obtained through the processing of S102 in FIG. 9 is performed. This processing is processing of calculating the total index $P_t$ from $MI_{Cr}$ and $MI_{Cb}'$ and the weights $W_{Cr}$ and $W_{Cb}$ using [Equation 3], which is the processing described above as being performed by the determination unit 14.

Next, in S113, processing for carrying out magnitude comparison between the total index calculated through the processing of S112 and a predetermined threshold is performed. In this processing, processing of carrying out the magnitude comparison between the total index $P_t$ and the threshold, which is described above as the processing performed by the determination unit 14, is performed.

Next, in S114, determination processing based on the magnitude comparison result in S113 is performed. That is, processing for determining whether or not the total index is a value equal to or larger than the threshold is performed.

If it is determined that the total index is a value equal to or larger than the threshold in the determination processing in S114 (if the determination result is YES), the process proceeds to S115. Then, in S115, processing for determining that a wearing object is present in the facial image obtained through the processing of S102 in FIG. 9 as a final determination result of the presence or absence of the wearing object is performed.

On the other hand, if it is determined that the total index is a value less than the threshold in the determination processing in S114 (if the determination result is NO), the process proceeds to S116. Then, in S116, processing for determining that no wearing object is present in the facial image obtained through the processing of S102 as a final determination result of the presence or absence of the wearing object is performed.

After the processing of either S115 or S116 is complete, the process proceeds to S117, and processing for outputting the final determination result made by the execution of the processing of either S115 or S116 is performed in S117.

The processor 21 performs the process of S111 to S117 described above, thereby providing the function of the determination unit 14 described above.

When the processing of S117 is complete, the process for determining presence or absence of a wearing object is terminated.

The process described above is the process for determining presence or absence of a wearing object. With the processor 21 performing the process for determining presence or absence of a wearing object, the computer 20 in FIG. 8 operates as the information processing device 1 in FIG. 7, which makes it possible to accurately determine presence or absence of a wearing object in the facial image.

While the disclosed embodiment and the advantages thereof have been described above in detail, those skilled in the art will be able to make various modifications, additions, and omissions without departing from the scope of the present invention as explicitly set forth in the claims.

For example, in the disclosed embodiment, an index indicating a degree of possibility that a wearing object is present in a facial image is calculated using a model, and determination as to whether or not a wearing object is present is made based on the calculated index and weights. However, the present invention is not limited to this. That is, it is obvious that any implementation method may be adopted as long as presence or absence of a wearing object is determined based on distribution of brightness of a determined color component after the color component of either a redness component or a blueness component is determined, for example. That is, an implementation method not using a model or an index may be adopted.

REFERENCE SIGNS LIST

1 Information processing device
2 Camera
11 Facial image acquisition unit
12 Index acquisition unit
13 Color component determination unit
14 Determination unit
20 Computer
21 Processor
22 Memory
23 Storage device
24 Reading device
25 Removable storage medium
26 Communication interface
27 Input/output interface
28 Bus

**Claims**

1. A determination method causing a computer to perform a process comprising:

obtaining a facial image captured by a camera;

obtaining, for individual color components included in the facial image, an index that indicates a degree of possibility that a wearing object that partially shields a face is present in the facial image based on distribution of brightness of each of the color components in the facial image;

determining any of the color components included in the facial image based on color information of the facial image; and

determining whether or not the wearing object is present in the facial image based on the determined color component and the index for the individual color components.

2. The determination method according to claim 1, wherein

the color information includes information that indicates a brightness level of each of the individual color components included in the facial image, and

in the determination of the color component, a color component with the brightness level lower than the brightness level of another color component among the individual color components included in the facial image is determined.

3. The determination method according to claim 2, wherein

the individual color components included in the facial image include a redness component and a blueness component, and

in the determination of the color component, the blueness component is determined when the brightness level of the blueness component included in the facial image is lower than the brightness level of the redness component included in the facial image, and

the redness component is determined when the brightness level of the redness component included in the facial image is lower than the brightness level of the blueness component included in the facial image.

4. The determination method according to claim 3, wherein

the brightness level of the redness component or the brightness level of the blueness component is corrected based on a relationship of the brightness level of each component with the redness component and the blueness component included in a reference facial image in which the wearing object is not present, and

the determination of the color component is made based on the corrected brightness.

5. The determination method according to claim 3 or 4, wherein the redness component and the blueness component include a Cr component and a Cb component in a YCbCr color space, respectively.

6. The determination method according to any one of claims 1 to 5, wherein the distribution of the brightness of the individual color components included in the facial image includes distribution in which a total value for each pixel array or an average value for each pixel array with respect to a pixel value of each color component of each pixel arranged in each pixel array of an image frame of the facial image in a horizontal direction is arranged according to an arrangement order of each pixel array of the image frame in a vertical direction.

7. The determination method according to any one of claims 1 to 6, wherein a model that outputs, for the individual color components included in the facial image, the index for each color component in response to an input of the distribution for each color component is generated by performing machine learning using, as training data, a group of data each of which represents the distribution for each color component of the facial image in which the wearing object is present and a group of data each of which represents the distribution for each color component of the facial image in which the wearing object is not present, and an output of the model when the distribution for each color component included in the facial image is input to the generated model for each color component is obtained as the index for each color component.

8. The determination method according to any one of claims 1 to 7, wherein

a weight for the individual color component included in the facial image, the weight for the determined color component being greater than the weight for a color component other than the determined color component, is obtained for each color component,

the index for the individual color component is provided with the weight for the individual color component, and

the determining whether or not the wearing object is present is performed based on the index provided with the weight for the individual color component.

9. The determination method according to claim 8, wherein whether or not the wearing object is present in the facial image is determined based on a result of magnitude comparison between an average value of the index provided with the weight for the individual color component and a threshold.

**10.** The determination method according to claim 8 or 9, wherein the weight for the determined color component is made greater as the brightness level of the determined color component included in the facial image is higher.

**11.** A determination program causing a computer to perform a process comprising:

obtaining a facial image captured by a camera; obtaining, for individual color components included in the facial image, an index that indicates a degree of possibility that a wearing object that partially shields a face is present in the facial image based on distribution of brightness of each of the color components in the facial image;

determining any of the color components included in the facial image based on color information of the facial image; and

determining whether or not the wearing object is present in the facial image based on the determined color component and the index for the individual color components.

**12.** An information processing device comprising:

a facial image acquisition unit that obtains a facial image captured by a camera;

an index acquisition unit that obtains, for individual color components included in the facial image, an index that indicates a degree of possibility that a wearing object that partially shields a face is present in the facial image based on distribution of brightness of each of the color components in the facial image;

a color component determination unit that determines any of the color components included in the facial image based on color information of the facial image; and

a determination unit that determines whether or not the wearing object is present in the facial image based on the determined color component and the index for the individual color components.

**13.** A determination method causing a computer to perform a process comprising:

obtaining a facial image captured by a camera; determining any of color components based on color information of the obtained facial image; and

determining whether or not a wearing object is present in the facial image based on brightness distribution of the determined color component among the color components included in the obtained facial image.

# FIG. 1

# FIG. 2

DARK ←——→ BRIGHT

PUPIL

MASK

# FIG. 3

DARK ⟷ BRIGHT

- - - - - - - - - - PUPIL
- - - - - NOSE TIP
- - - - - - - - - NOSTRIL
- - - - - - - - - - - ORAL SLIT

# FIG. 4

DARK ←——→ BRIGHT

— — — — — — — — — — PUPIL

— — — — NOSE TIP

— — — — — — — — NOSTRIL

— — — — — — — — ORAL SLIT

# FIG. 5

DARK ←——→ BRIGHT

# FIG. 6

DARK ⟷ BRIGHT

# FIG. 7

# FIG. 8

COMMUNICATION INTERFACE 26

MEMORY 22

PROCESSOR 21

28

INPUT/OUTPUT INTERFACE 27

READING DEVICE 24

25

STORAGE DEVICE 23

20

# FIG. 9

START

OBTAIN CAPTURED IMAGE — S101

OBTAIN FACIAL IMAGE FROM CAPTURED IMAGE — S102

CREATE DISTRIBUTION OF BRIGHTNESS OF REDNESS COMPONENT AND BLUENESS COMPONENT IN FACIAL IMAGE — S103

OBTAIN INDEX INDICATING DEGREE OF POSSIBILITY THAT WEARING OBJECT IS PRESENT IN FACIAL IMAGE FOR REDNESS COMPONENT AND BLUENESS COMPONENT — S104

CALCULATE BRIGHTNESS LEVEL OF REDNESS COMPONENT AND BLUENESS COMPONENT IN FACIAL IMAGE — S105

CORRECT CALCULATED BRIGHTNESS LEVEL — S106

COMPARE MAGNITUDE BETWEEN BRIGHTNESS LEVEL OF REDNESS COMPONENT AND BRIGHTNESS LEVEL OF BLUENESS COMPONENT — S107

S108
IS BRIGHTNESS LEVEL OF BLUENESS COMPONENT LOWER THAN BRIGHTNESS LEVEL OF REDNESS COMPONENT?

NO

YES S109
SELECT BLUENESS COMPONENT

S110
SELECT REDNESS COMPONENT

A

# FIG. 10

A

SET WEIGHT FOR REDNESS COMPONENT AND BLUENESS COMPONENT SUCH THAT SELECTED COLOR COMPONENT IS HEAVIER — S111

CALCULATE TOTAL INDEX USING INDEX AND WEIGHT FOR REDNESS COMPONENT AND BLUENESS COMPONENT — S112

COMPARE MAGNITUDE BETWEEN TOTAL INDEX AND THRESHOLD — S113

IS TOTAL INDEX VALUE EQUAL TO OR LARGER THAN THRESHOLD? — S114

NO →

YES ↓ — S115

DETERMINE THAT WEARING OBJECT IS PRESENT

DETERMINE THAT NO WEARING OBJECT IS PRESENT — S116

OUTPUT DETERMINATION RESULT — S117

END

## INTERNATIONAL SEARCH REPORT

| | International application No. |
| --- | --- |
| | PCT/JP2020/046151 |

**A. CLASSIFICATION OF SUBJECT MATTER**
Int. Cl. G06T7/00(2017.01)i, G06T7/90(2017.01)i
FI: G06T7/00 660A, G06T7/90 Z

According to International Patent Classification (IPC) or to both national classification and IPC

**B. FIELDS SEARCHED**

Minimum documentation searched (classification system followed by classification symbols)
Int. Cl. G06T7/00, G06T7/90

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | US 2019/0259174 A1 (INNODEM NEUROSCIENCES) 22 August 2019 (2019-08-22), entire text, all drawings | 1-13 |
| A | JP 2005-18466 A (CANON INC.) 20 January 2005 (2005-01-20), entire text, all drawings | 1-13 |
| A | JP 2000-082147 A (SHARP CORP.) 21 March 2000 (2000-03-21), entire text, all drawings | 1-13 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 25.02.2021 | 09.03.2021 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

| Patent Documents referred to in the Report | Publication Date | Patent Family | Publication Date |
|---|---|---|---|
| US 2019/0259174 A1 | 22.08.2019 | (Family: none) | |
| JP 2005-18466 A | 20.01.2005 | US 2004/0071352 A1 entire text, all drawings | |
| JP 2000-082147 A | 21.03.2000 | US 6633655 B1 entire text, all drawings GB 2341231 A entire text, all drawings EP 984386 A2 entire text, all drawings | |

International application No.

PCT/JP2020/046151

Form PCT/ISA/210 (patent family annex) (January 2015)

**EP 4 261 773 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010126120 A
- WO 2019102619 A
- JP 2019194888 A
- JP 2010157073 A
- JP 2004310397 A